# EUROPÄISCHE PATENTANMELDUNG

(11) **EP 1 186 944 A2**
(43) Veröffentlichungstag der Anmeldung: **13.03.2002**
(21) Anmeldenummer: 01120934.3
(22) Anmeldetag: 31.08.2001
(51) Int. Cl.: G03B 42/04

(54) **Vorrichtung und Verfahren zum Verarbeiten von lichtempfindlichem Aufzeichnungsmaterial**

(30) Priorität: 07.09.2000 DE 10044245
(71) Anmelder: Agfa-Gevaert AG, 51373 Leverkusen (DE)
(72) Erfinder: Müller, Jürgen, 81545 München (DE)

(57) **Zusammenfassung**

Es wird eine Vorrichtung (1) und ein Verfahren zum Verarbeiten von lichtempfindlichem Aufzeichnungsmaterial (5) vorgeschlagen. Dazu ist ein Empfangsmittel (15, 16) zum Empfangen eines ein belichtetes, lichtempfindliches Aufzeichnungsmaterial enthaltendes Aufbewahrungsmittels (4) von außerhalb der Vorrichtung (1) und eine Ladestation (15) zum Entladen des belichteten Aufzeichnungsmaterials aus dem Aufbewahrungsmittel (4) vorhanden. Mittels eines Transportmittels (20-24, 26, 27) kann ein Transportieren des entladenen, kein Aufzeichnungsmaterial enthaltenden Aufbewahrungsmittels (4) aus der Ladestation (15) erfolgen. Erfindungsgemäß weist die Vorrichtung des Weiteren ein Ausgabemittel (8, 9) zum Ausgeben des entladenen Aufbewahrungsmittels (4) aus der Vorrichtung und eine Schnittstelle (18) zu einem Dunkelraum (DK) auf, wobei das Ausgabemittel (8, 9) in der Vorrichtung (1) örtlich verschieden von dem Empfangsmittel (15, 16) im Bereich der Schnittstelle (18) angeordnet ist.

## Beschreibung

Die vorliegende Erfindung betrifft eine Vorrichtung und ein Verfahren zum Verarbeiten von lichtempfindlichem Aufzeichnungsmaterial gemäß den Oberbegriffen der Ansprüche 1 bzw. 13.

Derartige Vorrichtungen und Verfahren werden z. B. in der medizinischen Diagnose und auf dem Gebiet der zerstörungsfreien Materialprüfung verwendet. Als lichtempfindliches Aufzeichnungsmaterial werden dabei blattförmige Röntgenfilme verwendet. Aufbewahrungsmittel, in die der blattförmige Röntgenfilm geladen ist, sind lichtdicht verschließbare Röntgenfilmkassetten. Sowohl aus der DE 36 10 660 C1 als auch aus der DE 44 30 688 C1 sind Vorrichtungen und Verfahren zum Verarbeiten von lichtempfindlichem Aufzeichnungsmaterial bekannt. Die beiden Patentschriften beschreiben jeweils ein Röntgenkassetten-Be- und Entladegerät. Bei diesem Gerät wird belichteter blattförmiger Röntgenfilm aus der in das Gerät hineingeschobenen und darin geöffneten Röntgenkassette entnommen. Aus einem Vorratsmagazin wird anschließend ein Blatt unbelichteter Röntgenfilm entnommen und der zuvor entladenen Röntgenkassette zugeführt.

Die derart beladene Röntgenkassette wird anschließend an der gleichen Stelle, an der sie in das Gerät eingegeben wurde, aus dem Be- und Entladegerät ausgegeben und kann für eine neue Röntgenaufnahme verwendet werden. Sind die Vorratsmagazine leer, so werden sie zum Befüllen mit neuem, unbelichtetem Röntgenfilm von dem Benutzer aus dem Be- und Entladegerät entnommen und in einen Dunkelraum gebracht. Dieser Dunkelraum ist so stark abgedunkelt, dass Röntgenfilm von dem vorhandenen Licht nicht belichtet wird. Die lichtempfindlichen Röntgenfilme werden von den Filmherstellern üblicherweise als Blattfilmstapel in lichtdichten Hüllen ausgeliefert. Der Benutzer legt die lichtdicht verpackten Filmstapel in dem Dunkelraum in die Vorratsmagazine und zieht die Hülle von dem Filmstapel ab. Nach dem Auffüllen der Vorratsmagazine mit dem Röntgenfilmstapel werden die Magazine wieder in das Be- und Entladegerät eingeführt.

Aus der EP 00 52 159 A1 sind ebenfalls eine Vorrichtung und ein Verfahren zum Verarbeiten von Röntgenfilm bekannt. Zum Be- und Entladen der Röntgenkassette mit unbelichtetem Röntgenfilm innerhalb der bekannten Vorrichtung ist seitlich neben mehreren, übereinander angeordneten, gleichformatigen Vorratsmagazinen für unbelichteten Röntgenfilm eine Ladestation für die Röntgenkassette vorgesehen. Die Röntgenkassette wird zum Be- und Entladen über ein Empfangsmittel in die bekannte Be- und Entladevorrichtung eingeführt und darin geöffnet. Aus der auf der Ladestation abgestellten Röntgenkassette kann zunächst ein in dieser enthaltener, belichteter Röntgenfilm entladen werden. Dieser entladene Röntgenfilm wird dann horizontal nach hinten transportiert, um in einen von der Stellfläche abgetrennten und hinter der Stellfläche angeordneten Bereich zum Entwickeln des Röntgenfilms eingeführt zu werden. Dieser Bereich zum Entwickeln des Röntgenfilms ist, wie die übrigen Komponenten, fest in der bekannten Vorrichtung plaziert. Die so entladene Röntgenkassette wird daraufhin mit neuem, in einem der Vorratsmagazine enthaltenem Röntgenfilm beladen und dann für einen Belichtungsvorgang an dem Empfangsmittel aus der bekannten Vorrichtung ausgegeben.

Es ist die Aufgabe der vorliegenden Erfindung, eine Vorrichtung und ein Verfahren anzugeben, so dass ein Verarbeiten von unbelichtetem, lichtempfindlichem Aufzeichnungsmaterial einfach und effektiv möglich und eine hohe Funktionalität gegeben ist.

Diese Aufgabe wird gemäß der technischen Lehren des Anspruchs 1 oder des Anspruchs 13 gelöst.

Aufgrund der vorliegenden Erfindung kann ein Aufbewahrungsmittel, nachdem es in der Ladestation entladen wurde, aus der Ladestation transportiert werden, ohne dass neues, unbelichtetes Aufzeichnungsmaterial in das Aufbewahrungsmittel nachgeladen wird. Dadurch kann ein Anwender auf einfache Weise das belichtete, in dem Aufbewahrungsmittel enthaltene Aufzeichnungsmaterial entladen und verarbeiten lassen. Gleichzeitig ist gewährleistet, dass nach dem Entladen und Wegtransportieren ein anderes Aufbewahrungsmittel eingegeben und empfangen werden kann. Das Verarbeiten wenigstens zweier, in verschiedenen Aufbewahrungsmitteln enthaltener Aufzeichnungsmaterialien schnell hintereinander ist somit vorteilhafterweise möglich. Gemäß der Erfindung ist ein Ausgabemittel vorhanden, das in der Vorrichtung an einer anderen Stelle als das Empfangsmittel angeordnet ist. Dadurch kann das entladene Aufbewahrungsmittel unabhängig von dem Empfangen eines anderen Aufbewahrungsmittels an dem Empfangsmittel ausgegeben werden. Ausgabe und Empfang von Aufbewahrungsmitteln sind weitgehend getrennt voneinander, wodurch eine sehr gute Effektivität der erfindungsgemäßen Vorrichtung gegeben ist. Da das Ausgabemittel im Bereich einer Schnittstelle zu einem Dunkelraum angeordnet ist, ist es vorteilhafterweise möglich, das ausgegebene Aufbewahrungsmittel direkt von dem Dunkelraum aus mit neuem unbelichtetem Aufzeichnungsmaterial zu befüllen, so dass es anschließend erneut für einen neuen Belichtungsvorgang verwendet werden kann.

Die erfindungsgemäße Vorrichtung kann vorteilhafterweise so aufgestellt sein, dass ein Teil ihres Gehäuses die Schnittstelle zu dem Dunkelraum bildet. Derjenige Teil des Gehäuses, der als Schnittstelle zu dem Dunkelraum dient, kann beispielsweise so in eine in einer Wand des Dunkelraums eingebrachte Aussparung eingeschoben werden, dass der Gehäuseteil Teil der Dunkelraumwand wird. Die Verbindungsstellen zwischen dem Gehäuseteil und der Dunkelraumwand werden dabei lichtdicht verschlossen. Der Teil des Gehäuses, der die Schnittstelle bildet, kann eine komplette Gehäuseseite der erfindungsgemäßen Vorrichtung sein. Es ist aber ebenso möglich, nur einen kleinen Ausschnitt einer Gehäuseseite als Schnittstelle zu dem Dunkelraum auszugestalten. Prinzipiell ist es ausreichend, eine Möglichkeit zum Ausgeben des Aufbewahrungsmittels in den Dunkelraum hinein zu schaffen.

In einer besonders vorteilhaften Ausgestaltung enthält die Vorrichtung einen Speicher, in dem ein oder mehrere Aufbewahrungsmittel zumindest zwischengespeichert werden können. Durch diese mögliche Zwischenspeicherung von entladenen Aufbewahrungsmitteln wird das Empfangen und das Ausgeben von<Aufbewahrungsmitteln weiter voneinander entkoppelt. Es ist möglich, zunächst ein oder mehrere Aufbewahrungsmittel zu speichern, bevor sie an dem Ausgabemittel ausgegeben werden. Eine Bedienperson kann somit beispielsweise warten, bis sie Gelegenheit hat, ein zuvor eingegebenes Aufbewahrungsmittel aus der Vorrichtung zu entnehmen, ohne gleichzeitig den Empfang eines anderen Aufbewahrungsmittels zu blockieren. Des Weiteren können, falls gewünscht, mehrere Aufbewahrungsmittel kurzzeitig nacheinander oder auch gleichzeitig, je nach Ausgestaltung des Ausgabemittels, ausgegeben werden, damit die Aufbewahrungsmittel anschließend mit Aufzeichnungsmaterial befüllt werden können.

In einer weiteren, besonders vorteilhaften Ausgestaltung kann das Ausgabemittel den Speicher umfassen, so dass das entladene Aufbewahrungsmittel direkt zu dem Ausgabemittel transportiert und dort gespeichert werden kann. Das oder die in dem Speicher des Ausgabemittels gespeicherten Aufbewahrungsmittel können vorteilhafterweise zumindest teilweise aus der Vorrichtung herausragen. Sie können daher auf einfache und bequeme Weise, noch während sie in der Vorrichtung abgespeichert und gelagert sind, von einer Bedienperson mit Aufzeichnungsmaterial beladen und dann aus der Vorrichtung entnommen werden.

Aufgrund einer weiteren vorteilhaften Ausgestaltung der vorliegenden Erfindung weist die Vorrichtung ein Entwicklungsmittel zum Entwickeln des Aufzeichnungsmaterials auf. Dieses Entwickungsmittel kann in einem ersten Gehäuseteil der Vorrichtung und die Ladestation in einem zweiten Gehäuseteil untergebracht sein. Der zweite Gehäuseteil kann weiterhin gegenüber dem ersten Gehäuseteil bewegt werden. Die beiden Gehäuseteile sind dazu voneinander getrennt. Es ist daher auf einfache Weise möglich, eine sehr kompakte Anordnung zu erreichen und trotzdem sowohl zu dem Inneren des einen als auch zu dem des anderen Gehäuseteiles einen problemlosen Zugang von außen zu ermöglichen. Der zweite Gehäuseteil kann verschiebbar, beispielsweise mittels Schienen, an dem ersten Gehäuseteil befestigt sein. Dadurch ist auf einfache Weise ein Bewegen des zweiten Gehäuseteiles möglich.

Weitere vorteilhafte Ausgestaltungen der Erfindung können den abhängigen Ansprüchen entnommen werden.

Im Folgenden werden die Erfindung und ihre Vorteile anhand von Ausführungsbeispielen und den Zeichnungen beschrieben.

Es zeigen:
- Fig. 1: ein Anwendungsbeispiel der erfindungsgemäßen Vorrichtung und deren Bedienungsmöglichkeiten,
- Fig. 2: eine schematische Darstellung eines ersten Ausführungsbeispiels der erfindungsgemäßen Vorrichtung,
- Fig. 3: eine schematische Darstellung eines Ausgebens und eines Transportierens eines Aufbewahrungsmittels bei der erfindungsgemäßen Vorrichtung gemäß des ersten Ausführungsbeispiels,
- Fig. 4: eine schematische Darstellung eines zweiten Ausführungsbeispiels der erfindungsgemäßen Vorrichtung,
- Fig. 5: eine perspektivische Darstellung eines dritten Ausführungsbeispiels der erfindungsgemäßen Vorrichtung und
- Fig. 6: eine Draufsicht auf das dritte Ausführungsbeispiel der erfindungsgemäßen Vorrichtung gemäß der Fig. 5.

Im Folgenden werden für gleiche und gleich wirkende Elemente durchweg gleiche Bezugszeichen verwendet.

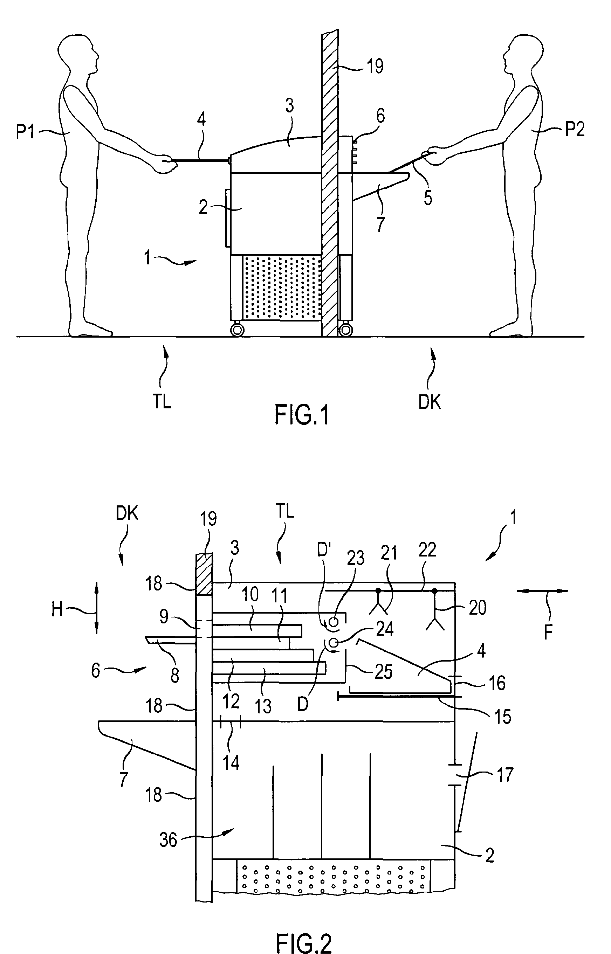

Die Fig. 1 zeigt ein Anwendungsbeispiel einer erfindungsgemäßen Verarbeitungsvorrichtung 1 zum Verarbeiten von Röntgenfilm, der hier als Aufzeichnungsmaterial dient. Verarbeiten von Röntgenfilm heißt hier insbesondere ein Entladen von Röntgenfilm aus einer Röntgenfilmkassette und ein Entwickeln von Röntgenfilm. Die Fig. 1 zeigt schematisch eine Trennwand 19, die einen Raum, in dem die Verarbeitungsvorrichtung 1 aufgestellt ist, in eine Dunkelkammer DK und in einen Raum TL mit Tageslicht unterteilt. Die erfindungsgemäße Verarbeitungsvorrichtung 1 ragt von dem Tageslichtraum TL teilweise in die Dunkelkammer DK hinein. Dazu ist in die Trennwand 19 eine Aussparung eingebracht, in die die Verarbeitungsvorrichtung 1 eingeschoben ist. Die Dunkelkammer DK ist so stark abgedunkelt, dass auch bei offenem Hantieren mit dem lichtempfindlichen Röntgenfilm dessen Belichtung verhindert wird. Im Tageslichtraum TL ist üblicherweise Tageslicht vorhanden. Die Verarbeitungsvorrichtung 1 muß daher gegenüber dem Tageslichtraum TL lichtdicht verschlossen sein, damit innerhalb der Verarbeitungsvorrichtung verarbeiteter Röntgenfilm nicht unerwünschterweise durch das Tageslicht belichtet wird.

Die Verarbeitungsvorrichtung 1 weist einen ersten Gehäuseteil 2 und einen zweiten Gehäuseteil 3 auf. Der erste Gehäuseteil 2 ist unterhalb des zweiten Gehäuseteiles 3 angeordnet. Der obere, zweite Gehäuseteil 3 kann gegenüber dem unteren, ersten Gehäuseteil 2 verschoben werden. Im Tageslichtraum TL ist eine erste Bedienperson P1 dargestellt. Diese erste Bedienperson P1 gibt eine Röntgenkassette 4 in den zweiten Gehäuseteil 3 ein. Der zweite Gehäuseteil 3 enthält dazu eine Eingabestation zum Eingeben der Röntgenkassette 4. In der Dunkelkammer ist eine zweite Bedienperson P2 dargestellt. Diese zweite Bedienperson P2 gibt einen belichteten blattförmigen Röntgenfilm 5 in die in der Dunkelkammer befindliche Seite der Verarbeitungsvorrichtung 1 ein. An dieser Dunkelkammerseite der Verarbeitungsvorrichtung 1 ist dazu eine Direkteingabestation 7 zum Eingeben von Röntgenfilm vorgesehen. Diese Direkteingabestation 7 ist hier Teil des ersten Gehäuseteiles 2. Oberhalb der Direkteingabestation 7 ist auf der Dunkelkammerseite des zweiten Gehäuseteiles 3 eine Ausgabeeinheit 6 zum Ausgeben von Röntgenkassetten aus der Verarbeitungsvorrichtung 1 vorhanden. Die Bedienperson P2 kann die Ausgabeeinheit 6 öffnen, um ein oder mehrere Röntgenkassetten aus der Vorrichtung 1 herauszunehmen. Dieses Öffnen kann entweder automatisch, beispielsweise initiert durch ein Drücken der Bedienperson P2 auf einen an der Dunkelkammeraußenseite des Gehäuses angebrachten Bedienungsknopf, oder auch manuell erfolgen. Nach dem Ausgeben einer Röntgenkassette kann die Bedienperson P2 neuen, unbelichteten Röntgenfilm in die ausgegebene Röntgenkassette einlegen. Nach dem Einlegen des neuen, blattförmigen Röntgenfilms wird dann die Ausgabeeinheit 6 von der Bedienperson P2, vorzugsweise lichtdicht, verschlossen.

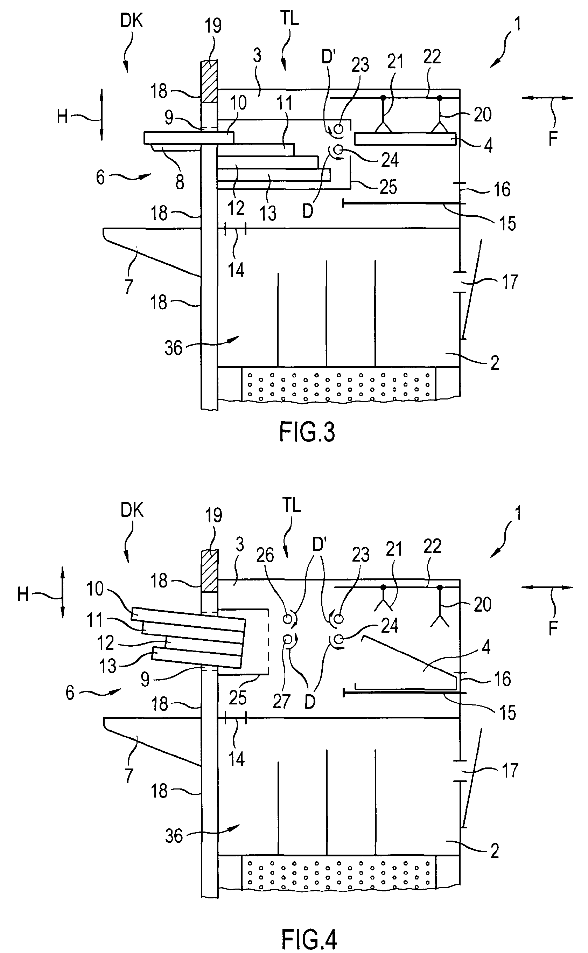

Die Fig. 2 zeigt eine schematische Darstellung eines ersten Ausführungsbeispiels der Verarbeitungsvorrichtung 1. Die Verarbeitungsvorrichtung 1 enthält den ersten Gehäuseteil 2 sowie den oberhalb des ersten Gehäuseteils 2 angeordneten zweiten Gehäuseteil 3. Die Verarbeitungsvorrichtung 1 ist wiederum in eine Aussparung innerhalb der Trennwand 19 eingeschoben, so dass ein Teil der Verarbeitungsvorrichtung 1 in die Dunkelkammer DK hineinragt. Im vorliegenden Ausführungsbeispiel bildet somit eine Gehäuseseite der erfindungsgemäßen Verarbeitungsvorrichtung 1 einen Teil der Abtrennung zwischen der Dunkelkammer DK und dem Tageslichtraum TL. Die in der Fig. 2 dargestellte linke Gehäuseseite der Verarbeitungsvorrichtung 1 bildet eine Schnittstelle 18 der Verarbeitungsvorrichtung 1 zu der Dunkelkammer DK. Diese linke Gehäuseseite, d. h. die Schnittstelle 18, füllt die in der Trennwand 19 vorhandene Aussparung aus. Die Verbindungsstellen zwischen der Schnittstelle 18 und der Trennwand sind lichtdicht verschlossen.

Innerhalb der Schnittstelle 18, d. h. innerhalb dieser (linken) Gehäuseseite der Verarbeitungsvorrichtung 1, sind die Direkteingabestation 7 zum Eingeben von belichtetem, blattförmigem Röntgenfilm sowie über dieser Direkteingabestation 7 eine Ablage 8 der Ausgabeeinheit 6 zum Ausgeben von Röntgenkassetten vorgesehen. Über die Ablage 8 und eine direkt neben dieser vorhandene, lichtdicht verschließbare Öffnung 9 kann eine oder mehrere Röntgenkassetten aus dem zweiten Gehäuseteil 3 ausgegeben werden. Die in Fig. 2 gezeigte Verarbeitungsvorrichtung 1 enthält einen Speicher 25 zum Abspeichern von mehreren Röntgenkassetten. Im vorliegenden Ausführungsbeispiel sind in dem Speicher 25 vier leere, von Röntgenfilm entladene Röntgenkassetten abgelegt, nämlich eine erste Röntgenkassette 10, eine darunter angeordnete, zweite Röntgenkassette 11 sowie eine darunter angeordnete, dritte Röntgenkassette 12 und eine darunter angeordnete, vierte Röntgenkassette 13. Die Öffnung 9 bildet einen Durchgang von dem Inneren des zweiten Gehäuseteiles 3 nach außerhalb der Verarbeitungsvorrichtung 1, d. h. in diesem Fall zur Dunkelkammer DK.

Die innerhalb des Speichers 25 vorhandenen Röntgenkassetten 10-13 haben hier unterschiedliche Formate, die an die Formate der in sie zu ladenden Röntgenfilme angepasst sind. Die vier Röntgenkassetten 10-13 sind im Inneren des zweiten Gehäuseteiles 3 zur linken Gehäuseseite hin, d. h. zur Schnittstelle 18, bündig angeordnet. Die Röntgenkassetten 10- 13 erstrecken sich bezüglich ihrer Längen horizontal in das Innere des zweiten Gehäuseteiles 3 hinein. Diese Längsausbreitungsrichtung der vier Ablagefächer 10-13 verläuft daher parallel zum Boden, auf dem die Verarbeitungsvorrichtung 1 aufgestellt ist, und senkrecht zur Trennwand 19. Die Länge der vier Ablagefächer 10-13, mit der sie horizontal in den Innenraum des zweiten Gehäuseteiles 3 hineinragen, ist unterschiedlich.

Seitlich versetzt ist neben dem Speicher 25 eine Ladestation 15 in dem zweiten Gehäuseteil 3 angeordnet. Diese Ladestation 15 ist so ausgestaltet, dass sie die von außerhalb der Verarbeitungsvorrichtung 1 eingegebene Röntgenkassette 4 aufnehmen kann. Im vorliegenden Ausführungsbeispiel ist in der rechten Gehäuseseite innerhalb des Gehäuseteiles 3 eine Eingabeöffnung 16 vorgesehen, über die die Kassette 4 von einer Bedienperson vom Tageslichtraum TL aus in das zweite Gehäuseteil 3 eingegeben werden kann. Die Eingabeöffnung 16 ist lichtdicht verschließbar, so dass auch während der Eingabe der Röntgenkassette 4 in die Ladestation 15 kein Licht von außerhalb in das zweite Gehäuseteil 3 eindringen kann. Sobald die Kassette 4 vollständig in die Ladestation 15 eingeschoben und in ihr abgestellt ist, kann sie geöffnet werden. Üblicherweise ist in einer solchen eingeschobenen Röntgenkassette ein belichteter Röntgenfilm enthalten. Dieser belichtete Röntgenfilm wird auf bekannte Weise aus der Röntgenkassette 4 heraustransportiert. Die Röntgenkassette 4 ist dann leer.

Über der Ladestation 15 ist innerhalb des zweiten Gehäuseteiles 3 ein horizontal verlaufendes Gestänge 22 angeordnet, an dem zwei in eine horizontale Richtung F verfahrbare Klammermittel 20 und 21 befestigt sind. Die beiden Klammermittel 20 und 21 sind beispielsweise mit einem aufwickelbaren Drahtseil an dem Gestänge 22 angebracht. Die beiden Klammermittel 20 und 21 können somit in vertikaler Richtung H verfahren werden. Die Klammermittel 20 und 21 dienen zum Klammern der in der Ladestation 15 befindlichen Röntgenkassette 4, so dass in einem Zustand, in dem die Röntgenkassette 4 von den beiden Klammermitteln 20 und 21 geklammert wird, ein Anheben und Transportieren der Röntgenkassette 4 in dem zweiten Gehäuseteil 3 möglich ist. Die Röntgenkassette wird in Richtung des Gestänges 2 angehoben und anschließend in Richtung des Speichers 25 transportiert. In dem Speicher 25 befindet sich ein Transportrollenpaar mit zwei gegenüberliegend angeordneten Transportrollen 23 und 24. Die Transportrolle 23 ist in eine Drehrichtung D' im Uhrzeigersinn und die Transportrolle 24 in eine Drehrichtung D entgegen dem Uhrzeigersinn drehbar gelagert. Das Transportrollenpaar ist direkt zu einer Öffnung des Speichers 25 benachbart plaziert, um eine durch die beiden Klammermittel 20 und 21 in Richtung des Speichers 25 transportierte Röntgenkassette aufnehmen und in ihre Speicherposition innerhalb des Speichers 25 weitertransportieren zu können. Die Öffnung des Speichers 25 ist vorteilhafterweise lichtdicht verschließbar, damit kein Licht von außerhalb der Verarbeitungsvorrichtung 1 durch die Öffnung 9 in das Innere des zweiten Gehäuseteiles 3 fallen kann. Das Transportrollenpaar 23, 24 ist in vertikaler Richtung H innerhalb des Speichers 25 verfahrbar. Dadurch kann auf einfache Weise eine über die beiden Klammermittel 20 und 21 in den Speicher 25 transportierte Kassette an der passenden Position innerhalb des Speichers 25 gespeichert werden. Das linke Klammermittel 21 kann die so transportierte Röntgenkassette loslassen, sobald die Kassette von dem Transportrollenpaar 23, 24 erfasst wurde. Nach einem vorgegebenen Transportweg der Kassette in Richtung der Ausgabeeinheit 6 kann dann auch das Klammermittel 20 die Kassette loslassen. Ein sicheres und ordnungsgemäßes Transportieren der in der Ladestation 15 entladenen Röntgenkassette wird somit gewährleistet. Das Gestänge 22, die beiden Klammermittel 20 und 21, das Transportrollenpaar 23, 24 sowie entsprechende, funktionsgerecht ausgestaltete Antriebsmittel (nicht weiter dargestellt) stellen hier ein Transportmittel zum Transportieren der entladenen Röntgenkassette aus der Ladestation 15 dar. Dieses Transportmittel wird zweckmäßigerweise über ein passend ausgestaltetes Steuermittel (nicht dargestellt) angesteuert.

Unterhalb des zweiten Gehäuseteiles 3 ist der erste Gehäuseteil 2 dargestellt. Der erste Gehäuseteil 2 enthält Entwicklungs- und Fixierbäder 36 zum Entwickeln und Fixieren von Röntgenfilm. Des Weiteren ist in dem ersten Gehäuseteil ein Trockner vorgesehen, der den in den flüssigen Chemikalien entwickelten und fixierten Film trocknet, bevor er aus dem ersten Gehäuseteil 2 ausgegeben wird. Zwischen dem ersten Gehäuseteil 2 und dem zweiten Gehäuseteil 3 ist eine Übergangsöffnung 14 vorgesehen, über die der aus der Röntgenfilmkassette 4 entladene, belichtete Röntgenfilm den Entwicklungs- und Fixierbädern 36 zugeführt wird. An der in der Fig. 2 dargestellten rechten Gehäuseseite der Verarbeitungsvorrichtung 1 ist im ersten Gehäuseteil 2 eine Austrittsöffnung 17 vorgesehen, über die der fertig entwickelte und getrocknete Röntgenfilm ausgegeben wird. Die Bedienperson kann den fertig entwickelten Röntgenfilm an der Austrittsöffnung 17 entnehmen.

Fig. 3 zeigt eine schematische Darstellung eines Beispiels des Ausgebens der Röntgenkassette 10 an dem Ausgabemittel 6 in der Verarbeitungsvorrichtung 1, die bereits anhand der Fig. 2 beschrieben wurde. In dem Speicher 25 abgelegte Röntgenkassetten können mittels eines weiteren Transportmittels (nicht dargestellt) in Richtung H vertikal verschoben und dann auf Höhe der Öffnung 9 aus dem zweiten Gehäuseteil 3 herausgeschoben werden. Gemäß der Fig. 3 wird die Röntgenkassette 10 aus der Öffnung 9 und über die Ablage 8 des Ausgabemittels 6 zumindest teilweise aus dem zweiten Gehäuseteil 3 herausgeschoben. Die Röntgenkassette 10 kann somit von einer Bedienperson dem Ausgabemittel 6 entnommen werden. Es ist möglich, dass die Bedienperson vor der Entnahme der Röntgenkassette 6 diese zunächst mit neuem, unbelichteten Röntgenfilm belädt. In gleicher Weise wie die Röntgenkassette 10 können auch die weiteren in dem Speicher 25 abgespeicherten Röntgenkassetten 11-13 ausgegeben werden.

Die Fig. 3 zeigt des Weiteren schematisch ein Beispiel des Transportierens der Röntgenkassette 4 in den Speicher 25. Die Röntgenkassette 4 wurde von den Klammermitteln 20 und 21 des Transportmittels zum Transportieren von in der Ladestation 15 entladenen Röntgenkassetten von der Ladestation 15 aus angehoben. Die Röntgenkassette 4 schwebt nun - von den beiden Klammermitteln 20 und 21 gehalten - über der Ladestation 15, und zwar, in vertikaler Richtung H betrachtet, in Höhe der Eingangsöffnung des Speichers 25. Durch ein weiteres horizontales Transportieren der Röntgenkassette 4 in Richtung F des Speichers, indem die beiden Klammermittel 20 und 21 entlang des Gestänges 22 verfahren werden, kann die Röntgenkassette 4 anschließend in den Speicher eingefahren werden. Unmittelbar hinter dem Eingang des Speichers 25 sind die beiden Transportrollen 23 und 24 angebracht, die die Röntgenkassette 4 ergreifen und mittels der Drehbewegungen D, D' weiter in den Speicher 25 hineinfahren.

Fig. 4 zeigt ein zweites Ausführungsbeispiel der erfindungsgemäßen Verarbeitungsvorrichtung 1. In diesem zweiten Ausführungsbeispiel hat die Verarbeitungsvorrichtung 1 einen Speicher 25, der im Vergleich zu demjenigen des ersten Ausführungsbeispiels der Fig. 1 und 2 unterschiedlich ausgestaltet ist. Zusätzlich zu dem Transportrollenpaar 23, 24 weist die Verarbeitungsvorrichtung 1 ein zweites Transportrollenpaar auf, das eine dritte Transportrolle 26 und eine vierte Transportrolle 27 enthält, die gegenüberliegend angeordnet sind. Die Transportrolle 26 ist in die Drehrichtung D' im Uhrzeigersinn und die Transportrolle 27 in die Drehrichtung D entgegen dem Uhrzeigersinn drehbar gelagert. Das zweite Transportrollenpaar 26, 27 ist auf der einen Seite direkt der Öffnung des Speichers 25 und auf der anderen Seite direkt dem ersten Transportrollenpaar 23, 24 benachbart plaziert. Das zweite Transportrollenpaar 26, 27 dient dazu, die von dem ersten Transportrollenpaar 23, 24 in Richtung des Speichers 25 transportierte Röntgenkassette aufzunehmen und in ihre Speicherposition innerhalb des Speichers 25 weitertransportieren zu können. Das zweite Transportrollenpaar 26, 27 ist ebenfalls in vertikaler Richtung H verfahrbar. Dadurch kann auf einfache Weise eine über die beiden Klammermittel 20 und 21 in den Speicher 25 transportierte Kassette an der passenden Position innerhalb des Speichers 25 gespeichert werden. Die beiden Transportrollenpaare 23, 24 und 26, 27 sind in diesem Ausführungsbeispiel außerhalb des Speichers 25 plaziert. Der Speicher 25 hat hier in horizontaler Richtung kleinere Ausmaße im Vergleich zum vorhergehenden Ausführungsbeispiel, da die leeren Röntgenkassetten 10-13 so in dem Speicher 25 abgelegt sind, dass sie teilweise aus dem zweiten Gehäuseteil 3 herausragen. Der Speicher 25 ist hier Teil des Ausgabemittels 6. Die Öffnung 9 des Ausgabemittels 6 ist größer als diejenige des ersten Ausführungsbeispiels. Ihre Größe läßt sich an die Anzahl der in dem Speicher 25 befindlichen Röntgenkassetten und deren Höhe anpassen. Die Öffnung 9 ist auch hier vorteilhafterweise lichtdicht verschließbar. Die Röntgenkassetten 10-13 sind im Speicher 25 übereinander gestapelt, so dass sie relativ wenig Speicherplatz benötigen. Da sie teilweise aus dem Gehäuse herausragen, können sie von der Bedienperson leicht mit Röntgenfilm beladen und der Vorrichtung 1 entnommen werden.

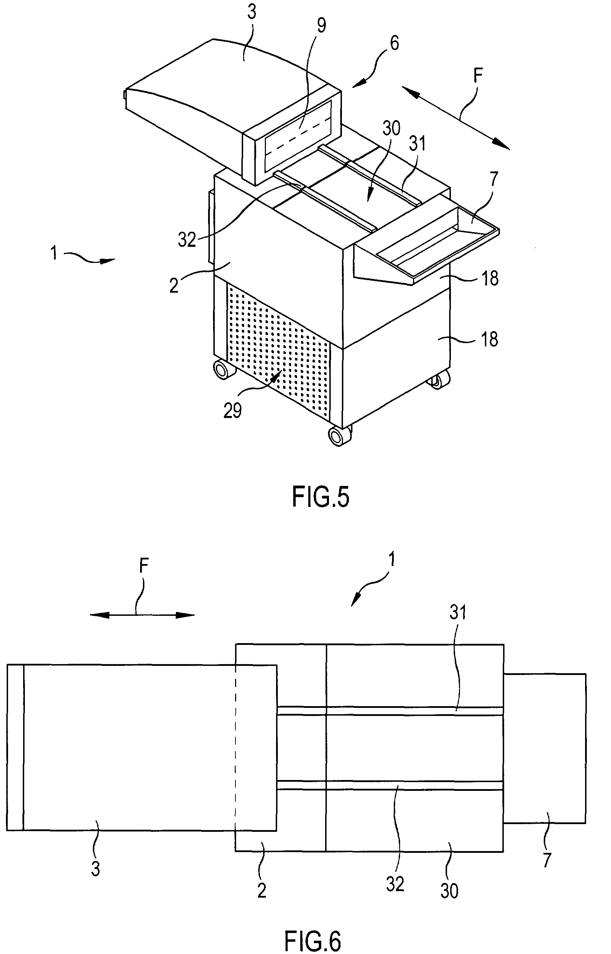

Fig. 5 zeigt eine perspektivische Darstellung des dritten Ausführungsbeispiels der Verarbeitungsvorrichtung 1. In diesem dritten Ausführungsbeispiel ist unterhalb des ersten Gehäuseteiles 2 ein Lagerraum 29 vorgesehen, der beispielsweise zum Lagern von Chemikalien o. ä. verwendet werden kann, die in die Entwicklungs- und Fixierbäder 36 nachgefüllt werden. Der zweite Gehäuseteil 3 ist bewegbar auf dem ersten Gehäuseteil 2 angeordnet. Der zweite Gehäuseteil 3 kann in eine Transportrichtung F verschoben werden. Anstelle eines Verschiebens des zweiten Gehäuseteiles 3 wäre es ebenso denkbar, eine andere Art des Bewegens, beispielsweise ein Verkippen, des zweiten Gehäuseteiles 3 gegenüber dem ersten Gehäuseteil 2 einzurichten. Zum Verschieben des zweiten Gehäuseteiles 3 sind in einer Oberseite 30 des ersten Gehäuseteiles 2 , die der unteren Seite des zweiten Gehäuseteiles 3 benachbart ist, zwei hier parallel verlaufende Führungsschienen 31 und 32 angebracht. Entlang dieser beiden Führungsschienen 31 und 32 wird der zweite Gehäuseteil 3 verschoben. Das Verschieben des zweiten Gehäuseteiles 3 ist hier so ausgestaltet, dass der zweite Gehäuseteil 3 in den Tageslichtraum TL hinein verschoben werden kann. Es ist aber ebenso möglich, den zweiten Gehäuseteil 3 seitlich, d. h. entlang der Schnittstelle 18 zu dem Dunkelraum DK hin, zu verschieben. In diesem Falle könnten die zum Verschieben dienenden Führungsschienen senkrecht zu der hier in der Fig. 5 dargestellten Ausbreitungsrichtung der Führungsschienen 31 und 32 verlaufen. Aufgrund der Verschiebbarkeit des zweiten Gehäuseteiles 3 gegenüber dem ersten Gehäuseteil 2 ist es möglich, Zugang zu den in dem ersten Gehäuseteil 2 befindlichen Entwicklungs- und Fixierbädern 36 zu gewährleisten. Dazu kann die Oberseite 30 des ersten Gehäuseteiles 2 geöffnet werden. Die Oberseite 30 kann beispielsweise aufgeklappt oder aufgeschoben werden. Dadurch ist insbesondere ein Herausziehen der Entwicklungs- und Fixierbäder 36 aus der Verarbeitungsvorrichtung 1 nicht notwendig. Dies kann nämlich aufgrund der Verschlauchung und des Gewichts der Entwicklungs- und Fixierbäder problematisch sein. Die Fig. 5 zeigt ebenfalls die lichtdicht verschließbare Öffnung 9 des Ausgabemittels 6 in der Schnittstellenseite 18 des zweiten Gehäuseteiles 3.

Fig. 6 zeigt eine Draufsicht auf die Verarbeitungsvorrichtung 1 gemäß der Fig. 5. Das zweite Gehäuseteil 3 ist hier in gegenüber dem ersten Gehäuseteil 2 verschobenem Zustand dargestellt. Die Fig. 6 zeigt die beiden Führungsschienen 31 und 32, die parallel zu der Verschieberichtung F des zweiten Gehäuseteiles 3 verlaufen. Wie bereits zuvor beschrieben, dient die Oberseite 30 des ersten Gehäuseteiles 2 zum Öffnen des ersten Gehäuseteiles 2, um Zugang zu den in diesem enthaltenen Entwicklungs- und Fixierbäder 36 zu bekommen.

Hierzu 3 Blatt Zeichnungen

## Patentansprüche

1. Vorrichtung (1) zum Verarbeiten von belichtetem, lichtempfindlichem Aufzeichnungsmaterial (5), wobei die Vorrichtung (1) aufweist:
ein Empfangsmittel (15, 16) zum Empfangen eines ein belichtetes, lichtempfindliches Aufzeichnungsmaterial enthaltendes Aufbewahrungsmittels (4) von außerhalb der Vorrichtung (1)
eine Ladestation (15) zum Entladen des belichteten Aufzeichnungsmaterials aus dem Aufbewahrungsmittel (4) und
ein Transportmittel (20-24, 26, 27) zum Transportieren des entladenen, kein Aufzeichnungsmaterial enthaltenden Aufbewahrungsmittels (4) aus der Ladestation (15),
**dadurch gekennzeichnet, dass**
die Vorrichtung des Weiteren ein Ausgabemittel (8, 9) zum Ausgeben des entladenen Aufbewahrungsmittels (4) aus der Vorrichtung und eine Schnittstelle (18) zu einem Dunkelraum (DK) aufweist, und
das Ausgabemittel (8, 9) in der Vorrichtung (1) örtlich verschieden von dem Empfangsmittel (15, 16) im Bereich der Schnittstelle (18) angeordnet ist.

2. Vorrichtung nach Anspruch 1, **dadurch gekennzeichnet, daß** das Transportmittel (20-24, 26, 27) so ausgestaltet ist, dass das entladene, kein Aufzeichnungsmaterial enthaltende Aufbewahrungsmittel (4) in Richtung des Ausgabemittels (8, 9) transportierbar ist.

3. Vorrichtung nach Anspruch 1 oder Anspruch 2, **dadurch gekennzeichnet, dass** sie ein Gehäuse (2, 3) aufweist und die Schnittstelle (18) ein Teil des Gehäuses (2, 3) ist.

4. Vorrichtung nach einem der vorhergehenden Ansprüche, **dadurch gekennzeichnet, dass** sie einen Speicher (25) zum Speichern des entladenen Aufbewahrungsmittels (4, 10-13) aufweist.

5. Vorrichtung nach Anspruch 4, **dadurch gekennzeichnet, dass** der Speicher (25) eine solche Speicherkapazität hat, dass er mehrere Aufbewahrungsmittel (10-13) aufnehmen kann.

6. Vorrichtung nach Anspruch 4 oder Anspruch 5, **dadurch gekennzeichnet, dass** das Ausgabemittel (8, 9) den Speicher (25) umfasst.

7. Vorrichtung nach Anspruch 5 oder Anspruch 6, **dadurch gekennzeichnet, dass** der Speicher (25) so ausgestaltet ist, dass mehrere gespeicherte Aufbewahrungsmittel (10-13) aufeinander stapelbar sind.

8. Vorrichtung nach einem der Ansprüche 5-7, **dadurch gekennzeichnet, dass** der Speicher (25) so ausgestaltet ist, dass wenigstens eines der gespeicherten Aufbewahrungsmittel (10-13) wenigstens teilweise aus der Vorrichtung (1) herausragt.

9. Vorrichtung nach einem der vorhergehenden Ansprüche, **dadurch gekennzeichnet, dass** sie ein Entwicklungsmittel (36) zum Entwickeln von belichtetem Aufzeichnungsmaterial (5) sowie einen ersten Gehäuseteil (2) und einen zweiten Gehäuseteil (3) aufweist und das Entwicklungsmittel (36) in dem ersten Gehäuseteil (2) und die Ladestation (15) in dem zweiten Gehäuseteil (3) angeordnet und der zweite Gehäuseteil (3) des Weiteren beweglich mit dem ersten Gehäuseteil (2) verbunden ist, wobei der erste Gehäuseteil (2) unter dem zweiten Gehäuseteil (3) angeordnet ist und eine obere, dem zweiten Gehäuseteil (3) benachbarte Gehäusefläche (30) des ersten Gehäuseteiles (2) so ausgestaltet ist, dass sie geöffnet werden kann.

10. Vorrichtung nach Anspruch 9, **dadurch gekennzeichnet, dass** der zweite Gehäuseteil (3) verschiebbar mit dem ersten Gehäuseteil (2) verbunden ist.

11. Vorrichtung nach einem der vorhergehenden Ansprüche, **dadurch gekennzeichnet, dass** das Aufbewahrungsmittel (4, 10-13) eine lichtdicht verschließbare Kassette ist.

12. Vorrichtung nach einem der vorhergehenden Ansprüche, **dadurch gekennzeichnet, dass** das Aufzeichnungsmaterial (5) Film für radiografische Anwendungen ist.

13. Verfahren zum Verarbeiten von belichtetem, lichtempfindlichem Aufzeichnungsmaterial (5), wobei
ein ein belichtetes, lichtempfindliches Aufzeichnungsmaterial enthaltendes Aufbewahrungsmittels (4) empfangen,
das belichtete Aufzeichnungsmaterial in einer Ladestation (15) aus dem empfangenen Aufbewahrungsmittel (4) entladen und
das entladene, kein Aufzeichnungsmaterial enthaltende Aufbewahrungsmittel (4, 10-13) aus der Ladestation (15) transportiert wird,
**dadurch gekennzeichnet, dass**
das entladene Aufbewahrungsmittel (4) an einem anderen Ort als demjenigen, an dem es empfangen wurde, im Bereich einer Schnittstelle (18) zu einem Dunkelraum (DK) ausgeben wird.
